# EUROPÄISCHE PATENTANMELDUNG

(11) **EP 1 717 503 A2**
(43) Veröffentlichungstag der Anmeldung: **02.11.2006**
(21) Anmeldenummer: 05025152.9
(22) Anmeldetag: 17.11.2005
(51) Int. Cl.: F16L 13/14

(54) **Pressverbindung für Rohre**

(30) Priorität: 28.04.2005 CH 7522005
(71) Anmelder: F. X. Bachmann AG, 1700 Fribourg (CH)
(72) Erfinder: Bachmann, Franz, 6300 Zug (CH)
(74) Vertreter: Blum, Rudolf Emil

(57) **Zusammenfassung**

Bei einer Rohrverbindung mit einem verbindungskörper (2) und einem in Längsrichtung aufpressbaren Pressring (3) wird ein Zahnmittel (4) vorgesehen, das sich höchstens 1 Millimeter von der Innenwandung des Presskörpers abhebt. Die dem Zahnmittel benachbarte Innenwandung (6, 7) ist dabei zylindrisch und absatz- oder wölbungslos. Auf diese Weise lassen sich dünnwandige Rohre (20) sicher und kostengünstig verbinden.

## Beschreibung

Die Erfindung betrifft eine stützkörperlose Rohrverbindung gemäss Oberbegriff des Anspruchs 1.

Es sind Rohrverbindungen bekannt, bei denen ein Stützkörper an der Innenseite des Rohres anliegt. Durch das praktisch unvermeidliche nur partielle Anliegen kann Spaltkorrosion entstehen und können unerwünschte Ablagerungen erfolgen. Es sind weiter Rohrverbindungen bekannt, bei denen nur ein aussen am Rohr vorgesehener Verbindungskörper vorhanden ist und auf einen Stützkörper verzichtet wird, so z.B. aus EP-A-0 521 064.

Im Installationsbereich (Niederdruck) werden überwiegend dünnwandige Metallrohre aus rostfreien Stählen oder aus Kupfer verwendet, wobei unter dünnwandig eine Wandstärke im Bereich von einem Millimeter zu verstehen ist; in Zukunft werden auch Rohre mit einer um 10 % bis 20 % reduzierten Wandstärke eingesetzt werden. Infolge der üblichen Längsnahtschweissung weisen die Rohre über den Umfang gesehen unterschiedliche Härte auf.

Es stellt sich die Aufgabe, dünnwandige Metallrohre auf kostengünstige und sichere Weise verbinden zu können.

Dies wird mit einer stützkörperlosen Rohrverbindung der eingangs genannten Art mit den kennzeichnenden Merkmalen des Anspruchs 1 erreicht.

Durch die geringe Zahnhöhe und die Ausbildung der benachbarten Innenwandungsabschnitte wird sichergestellt, dass das Rohr nach dem Verpressen im Wesentlichen auf seiner ganzen Einstecklänge in den Verbindungskörper weitestgehend vollflächig an diesem anliegt, was weiter bewirkt, dass der Dichtzahn oder gegebenenfalls die Dichtzähne überall gleichmässig in die Rohroberfläche eindringt bzw. eindringen, auch im Bereich der härteren Schweissnaht. Dadurch, dass im verpressten Zustand der hohlzylindrische Verbindungskörper weitestgehend fest und ohne Hohlräume an der Oberfläche des Rohres anliegt, kann auf eine spezielle Verdrehsicherung für das Rohr im Verbindungskörper verzichtet werden, da dazu der Reibschluss des vollflächig anliegenden Rohres genügt. Das Zahnmittel wird dadurch entlastet bzw. kann die Dichtfunktion übernehmen, ohne eine Haltefunktion ausüben zu müssen. Die im Wesentlichen vollflächige Verpressung ergibt hohe Verbindungsfestigkeit auch bei pulsierender Belastung der Rohrverbindung. Es können durch die geringe Zahnhöhe auch dünnwandige Rohre ohne inneren Stützkörper verpresst werden. Die geringe Erhöhung des Zahnmittels über die anschliessende zylindrische und absatz- bzw. wölbungslose Innenwandung des Verbindungskörpers ergibt eine geometrische Form der Innenseite des Verbindungskörpers, die dem Endzustand der verpressten Rohrverbindung schon sehr nahe kommt und damit eine geringe Verformung ergibt. Die geringe Erhöhung ergibt weiter eine einfache Innengeometrie mit günstigen Fertigungskosten. Bei einer besonders bevorzugten Ausführung wird ferner mit dem Ende des Pressringes eine Mehrkantform erzielt, die als Verdrehsicherung das Zahnmittel besonders entlastet.

Es kann nur ein Zahnmittel oder es können zwei Zahnmittel vorgesehen sein. Um das Anliegen der Innenwandung des Verbindungskörpers zwischen den Zahnmitteln an das Rohr zu fördern, werden die benachbarten Zahnmittel vorzugsweise um eine im Vergleich zur Zahnhöhe grosse Distanz voneinander beabstandet, welche das 10- bis 30-fache und vorzugsweise das ca. 20-fache der Zahnhöhe beträgt. In Verbindung mit der erfindungsgemässen geringen Zahnhöhe ergibt dies im Bereich zwischen den Zahnmitteln ein praktisch vollständig hohlraumloses Anliegen der Rohrwandung an der Innenwandung des Verbindungskörpers. Nach dem letzten zylindrischen Innenwandungsabschnitt verläuft die Innenwandung des Verbindungskörpers bis zu einem Anschlag für das Rohrende hin vorzugsweise leicht konisch zulaufend, aber bevorzugterweise ebenfalls absatzfrei und wölbungslos.

Bei der Lösung mit nur einem niedrigen Zahn oder genügend weit beabstandeten mehreren Zähnen, insbesondere genau zwei Zähnen, wirkt der gesamte Druck des Zahnmittels auf das Rohr und ergibt eine Einschnürung im Bereich des Zahnmittels und ein hohlraumfreies Anliegen der Innenwandung des Verbindungskörpers am Rohr. Sind dagegen gemäss dem Stand der Technik höhere Zähne oder auch mehrere Zähne sehr nahe beieinander angeordnet, so verteilt sich der Druck gleichmässig auf alle Zähne und es entsteht eine Flächenpressung, die eine ungenügende Eindringtiefe der Zähne ergeben kann und besonders bei einem dünnwandigen Rohr entstehen Hohlräume zwischen dem Verbindungskörper und dem Rohr.

Der Erfindung liegt weiter die Aufgabe zugrunde, eine solche Verbindung auch für Kunststoffrohre zu schaffen. Dies wird durch die in Anspruch 12 angegebene Höhe des Zahnmittels erreicht.

Im folgenden werden Ausführungsbeispiele der Erfindung anhand der Figuren näher erläutert. Dabei zeigt
Figur 1 einen Verbindungskörper;
Figur 2 den Verbindungskörper von Figur 1 mit eingeschobenem Rohr und einem Pressring in einer Anfangsstellung für die Verpressung;
Figur 3 die fertiggestellte Pressverbindung;
Figur 4 eine Teildarstellung einer weiteren Ausführungsform des Verbindungskörpers;
Figur 5 eine Darstellung des Pressringes gesehen vom freien Ende her; und
Figur 6 einen Schnitt entlang der Linie A-A durch den Pressring von Figur 5;

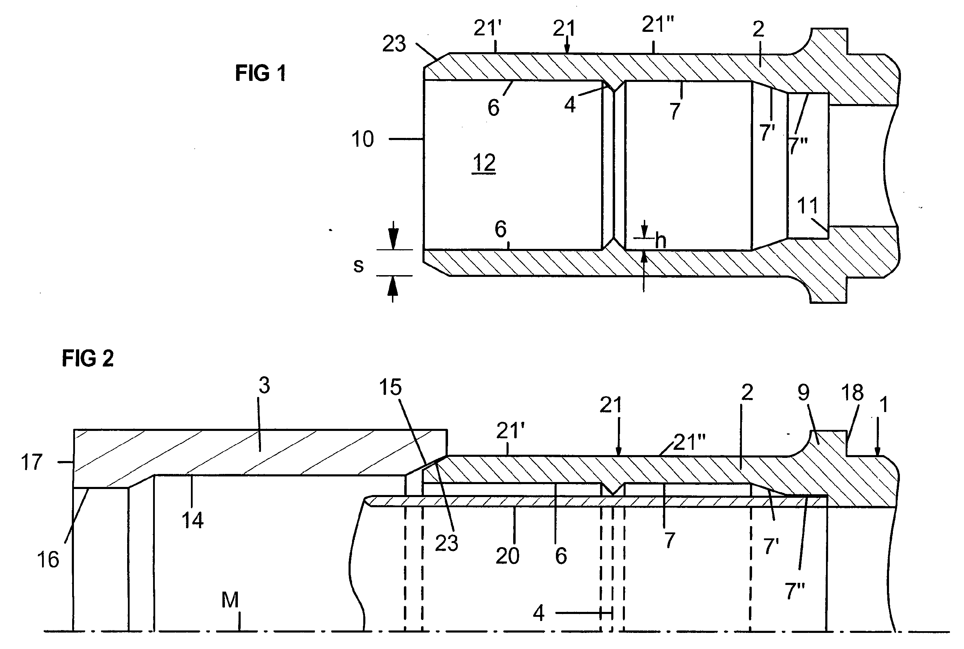

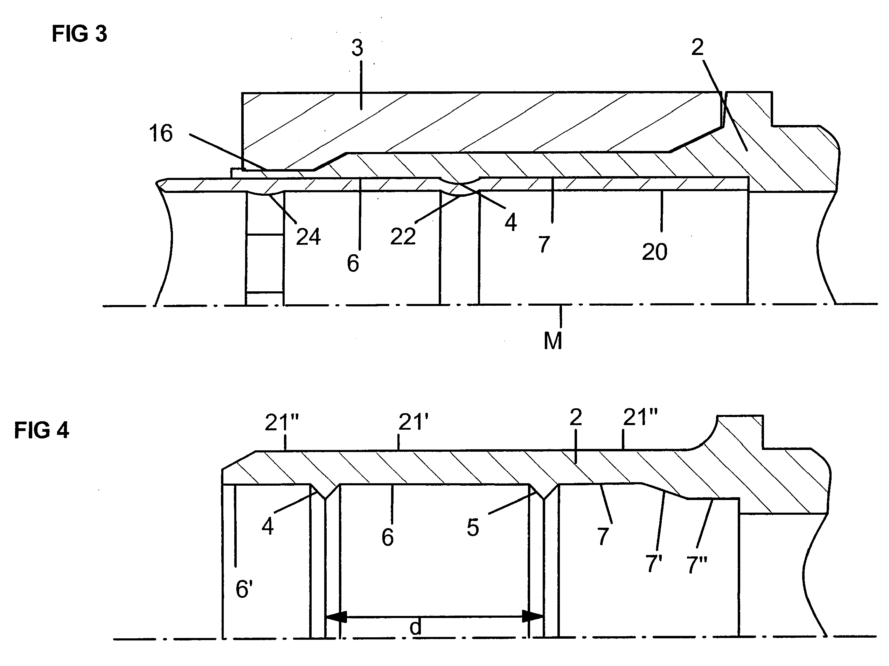

In den Figuren sind die Teile z.T. ganz im Schnitt dargestellt, z.T. nur bis zur Symmetrieachse M. Die Teile sind nicht massstäblich dargestellt und Zähne und konische Abschnitte können zur Verdeutlichung vergleichsweise zu ausgeprägt dargestellt sein. Anhand der Figuren 1 bis 3 werden erste Ausführungsformen der Erfindung erläutert. Die in Figur 3 fertiggestellte Rohrverbindung 1 ist in Figur 2 in einer Ausgangsstellung gezeigt, in welcher der Verbindungskörper 2, der Pressring 3 und das Ende des Rohres 20 dargestellt sind. Vom Verbindungskörper 2 ist dabei nur ein Ende dargestellt. Das andere Ende kann auf dieselbe Weise ausgebildet sein, wenn zwei Rohre miteinander verbunden werden sollen, es kann aber auch winkelförmig abknicken, ein Gewinde aufweisen oder eine beliebige Armatur tragen, mit welcher das Rohr verbunden werden soll. Die gesamte Anordnung ist ferner im wesentlichen rotationssymmetrisch um die Rohrachse, bzw. die Mittellängsachse M des Verbindungskörpers und des Pressringes. In Figur 1 ist der Verbindungskörper 2 noch ohne eingeführtes Rohrende des zu verbindenden Rohres dargestellt. Ersichtlich ist, dass der Verbindungskörper 2 hülsenartig hohlzylindrisch ist und einen Hohlraum 12 zum Einschieben des Rohres aufweist. An der Innenwandung des Verbindungskörpers ist mindestens ein Zahnmittel 4 angeordnet, allenfalls sind zwei Zahnmittel 4 und 5 vorgesehen (Figur 4). Das Zahnmittel wird jeweils von einem ringförmig, vorzugsweise ununterbrochen umlaufenden Zahn gebildet, der in der Figur als im Querschnitt im wesentlichen dreieckiger Zahn dargestellt ist. Dies wird noch näher erläutert. Bevorzugterweise ist das einzige Zahnmittel ungefähr in der Mitte zwischen dem freien Ende 10 des Verbindungskörpers 2 und dem Endanschlag 11 für das Rohr 20 im Verbindungskörper 2 angeordnet. Das Zahnmittel, oder ggf. die Zahnmittel, bestimmen den Durchmesser des Hohlraumes 12 des Verbindungskörpers 2 für das Einschieben des Rohres und die Dimensionierung des Verbindungskörpers 2 mit dem Zahnmittel oder den Zahnmitteln ist entsprechend an das jeweilige zu verbindende Rohr angepasst, derart, dass das Rohr mit seinem Ende unter Berücksichtigung der üblichen Rohrtoleranzen ohne erheblichen Kraftaufwand in den Hohlraum des Verbindungskörpers 2 eingeschoben werden kann, wobei dies bis zu dem vorzugsweise vorgesehenen Endanschlag 12 für das Rohr erfolgt. Die Verbindung ist für übliche Niederdruck-Installationsrohre dimensioniert, so z.B. für ein Rohr mit 22 mm Rohraussendurchmesser.

Gemäss der Erfindung ist nun die Höhe h des Zahnmittels, mit welcher sich da Zahnmittel über die Innenwandung des Verbindungskörpers 2 erhebt, für Metallrohre maximal 1 Millimeter und liegt insbesondere im Bereich von 0,1 mm bis 0,7 mm, weiter bevorzugt im Bereich von 0,1 bis 0,5 mm und vorzugsweise im Bereich von 0,1 bis 0,4 mm. Für Kunststoffrohre kann jeweils eine etwas grössere Höhe h des Zahnmittels vorgesehen werden, welche insbesondere im Bereich von 0,5 bis 1 mm liegt. Ist mehr als ein Zahnmittel vorgesehen, so liegen vorzugsweise sämtliche Zahnmittel innerhalb des angegebenen Bereiches, bei zwei Zahnmitteln liegen beide Zahnmittel in diesem Bereich, können aber innerhalb des angegebenen Bereiches unterschiedliche Höhe h untereinander aufweisen. Sind genau zwei Zahnmittel oder mehr als zwei Zahnmittel vorgesehen, so sind bevorzugterweise das erste Zahnmittel 4 und das zweite Zahnmittel 5 um einen Abstand d voneinander beabstandet, welcher mindestens den 10-fachen Betrag der Höhe h ausmacht (im Falle verschiedener Höhen h kann dies der 10-fache Betrag der einen oder der anderen Höhe h sein). Bevorzugt ist aber ein Abstand d im Bereich des 10- bis 30-fachen, insbesondere des 15-- bis 25-fachen, 10- bis 20-fachen und insbesondere des ca. 20-fachen der Höhe h des Zahnmittels.

Auf diese Weise entsteht in Kombination der geringen Höhe h des Zahnes mit der wesentlichen wölbungslosen und absatzfreien Ausgestaltung der dem Zahnmittel benachbarten Innenwandungsabschnitte 6 und 7 nach der Verpressung ein im Wesentlichen hohlraumfreies Anliegen des Rohres 20 an der Innenwandung des Verbindungskörpers. Die Ausgestaltung der Innenwandabschnitte 6 und 7 in zylindrischer Form und im Wesentlichen ohne Absätze oder Wölbungen in Längsrichtung trägt auch zur einfachen Herstellung bei.

Wie in den Figuren dargestellt, verläuft der an den einzigen Zahn 4 bzw. zweiten Zahn 5 und dessen Innenwandungsabschnitt 7 anschliessende Innenwandungsabschnitt 7' des Verbindungskörpers 2 bis zum Anschlag 11 leicht konisch zusammenlaufend. Wie die anderen Innenwandungsabschnitte 6, 7 ist aber auch dieser Innenwandungsabschnitt 7 bevorzugterweise in Längsrichtung ohne Absätze oder Wölbungen ausgeführt, so dass sich ein hohlraumloses Anliegen an das Rohr ergibt. An den Abschnitt 7' folgt bevorzugterweise noch ein Abschnitt 7'', dessen Durchmesser im Wesentlichen dem Rohrdurchmesser entspricht und dieses zum Ausschlag 11 führt.

Die Form des Zahnmittels 4 bzw. 5 und gegebenenfalls weiterer Zahnmittel ist vorzugsweise annähernd dreiecksförmig, wobei die Spitze des Dreieckes bevorzugt nicht als scharfe Spitze, sondern abgeflacht oder allenfalls abgerundet ausgeführt ist (in der Zeichnung nicht dargestellt). Die im Querschnitt ersichtliche Dreiecksform ist vorzugsweise annähernd die Form eines gleichschenkligen Dreiecks, wobei die sich die von der wandungsseitigen Basis des Dreiecks abhebenden Seiten des Dreiecks mit der Basis einen Winkel von bevorzugterweise 45° einschliessen, der aber auch in einem Bereich von 40-50° liegen kann.

An seiner Aussenwandung 21 im Bereich des einzuschiebenden Rohres ist der Verbindungskörper 2 im wesentlichen zylindrisch ausgebildet und der Bereich der Aussenwandung 21 mit den beiden Aussenwandungsabschnitten 21' und 21'' beidseits des Zahnmittels 4 verläuft ebenfalls im Wesentlichen ohne Absätze oder Wölbungen in Längsrichtung. Bevorzugterweise ist allerdings der freie Endbereich 10 des Verbindungskörpers aussenseitig gegenüber der restlichen Wandung 21 abgesetzt, so dass sich damit ein Eingangsbereich 23 der Aussenwandung ergibt, welcher einen geringeren Durchmesser aufweist. Während die Wandstärke s im Verbindungsbereich in der Regel gleich gross oder um einen Faktor von z.B. bis 0,5 kleiner als das zu verpressende Rohr gewählt wird, ist die Wandstärke damit im Eingangsbereich 23 etwas reduziert.

Der Pressring 3 weist bevorzugterweise drei verschiedene Stufen 15,14 und 16 seiner Innenwandung auf. Dies wird bevorzugterweise gewählt, um beim Verbinden durch Aufpressen des Pressringes 3 auf den Verbindungskörper 2 partiell eine mehrstufige Verpressung zu erzielen. Figur 2 zeigt dabei eine Anfangsstellung, in welcher der Bereich 15 der Innenwandung des Pressringes 3 am Eingangsbereich 23 des Verbindungskörpers anliegt. Von der Anfangsstellung von Figur 2, in welcher der Pressring 3 auf dem Eingangsbereich 23 für die weitere Verpressung positioniert werden kann, erfolgt nun mittels eines nicht dargestellten Presswerkzeuges, welches einerseits auf die hintere Stirnwand 17 des Pressringes und andererseits auf die Stirnwand 18 eines Vorsprunges 9 am Verbindungskörper einwirken kann, das Aufpressen des Pressringes auf den Verbindungskörper. Die Dimensionierung des Pressringes ist so, dass das Rohr 20 auf der gesamten Einstecklänge in den Verbindungskörper 2 noch in seinem elastischen Bereich gepresst wird. In der Stufe 16 des Pressringes 3 ist vorzugsweise eine Ausgestaltung als Mehrkant vorgesehen. Damit wird der kraftschlüssigen Verbindung von Rohr und Verbindungskörper durch das weitestgehend hohlraumlose aneinander anliegen derselben noch ein Formschluss hinzugefügt. Dies ist besonders vorteilhaft zur Entlastung des einen oder der beiden Zähne von Torsionskräften des Rohres oder pulsierenden Kräften und trägt damit zur Langzeitdichtigkeit der Verbindung bei.

Wie in Figur 3 ersichtlich, ergibt die geringe Zahnhöhe, bevorzugterweise in Verbindung mit nur einem oder nur zwei Zähnen und einem grossen Abstand zwischen den Zähnen ein im wesentlichen hohlraumfreies Verpressen des Rohres 20 im Verbindungskörper 2. Die niedrigen Zähne dringen sicher in das Rohrmaterial ein und ergeben eine sickenartige Verformung 22 an der Innenseite des Rohres. Die bevorzugte Mehrkantverformung am Ende des Pressringes verformt das Rohr entsprechend zu einer Mehrkantform 24.

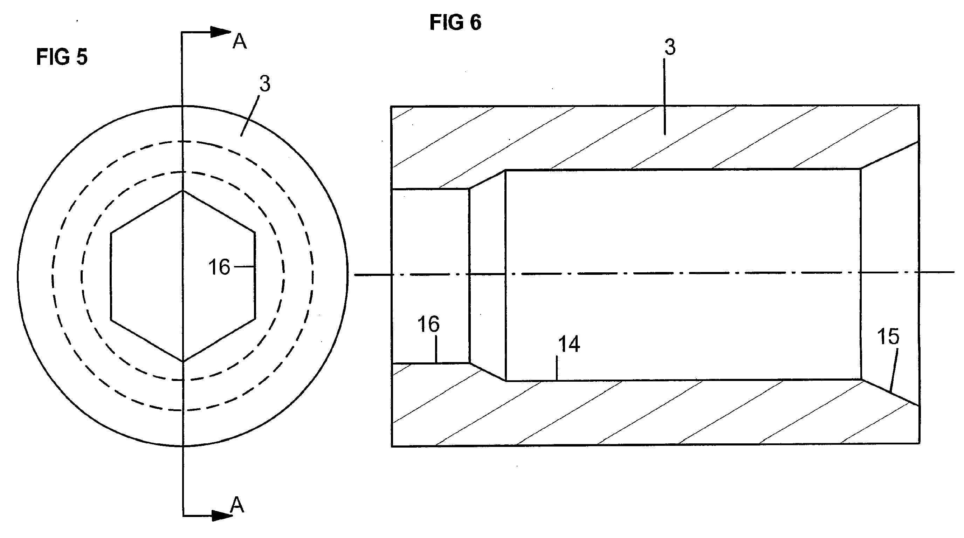

Figur 5 zeigt eine Ansicht auf das freie Ende des Pressringes 3 mit der Stirnfläche 17 und dem Mehrkant 23. Figur 6 zeigt den Pressring geschnitten entlang der Linie A-A von Figur 5.

## Patentansprüche

1. Stützkörperlose Rohrverbindung (1), umfassend einen hohlen Verbindungskörper (2) zur Aufnahme des Endbereiches mindestens eines Metallrohres (20) und mindestens einen Pressring (3), durch dessen presskraftbewirktes Aufschieben auf die Aussenseite (21) des Verbindungskörpers in Längsrichtung des Rohres der Rohrendbereich im Verbindungskörper (2) dicht festlegbar ist, wobei an der Innenwandung des Verbindungskörpers zum Eingriff in das Rohr mindestens ein ringfrömig umlaufendes Zahnmittel (4; 4'; 5) vorgesehen ist, **dadurch gekennzeichnet, dass** sich das Zahnmittel über die beidseits benachbarten Innenwandungsabschnitte (6, 7) maximal 1 Millimeter erhebt und dass die benachbarten Innenwandungsabschnitte (6, 7) im Wesentlichen zylindrisch sowie absatzfrei und wölbungsfrei ausgebildet sind.

2. Stützkörperlsoe Rohrverbindung nach Anspruch 1, **dadurch gekennzeichnet, dass** die Aussenfläche (21) des Verbindungskörpers ebenfalls in Abschnitten (21', 21'') beidseits des Zahnmittels (4; 4'; 5) im Wesentlichen zylindrisch und absatzfrei und wölbungsfrei ausgebildet ist.

3. Stützkörperlose Rohrverbindung nach Anspruch 1 oder 2, **dadurch gekennzeichnet, dass** der Endbereich des Pressrings (3) eine mehrkantige Innenfläche (16) ausbildet, derart, dass bei vollständig aufgeschobenem Pressring das Verbindungskörperende und das Rohr zu einer Mehrkantform verpresst sind.

4. Stützkörperlose Rohrverbindung nach einem der Ansprüche 1 bis 3, **dadurch gekennzeichnet, dass** sich das Zahnmittel über die beidseits benachbarten Innenwandungsabschnitte (6, 7) weniger als 1 Millimeter erhebt und sich insbesondere 0,1 mm bis 0,7 mm erhebt und sich insbesondere 0,1 bis 0,5 mm erhebt und sich insbesondere 0,1 bis 0,4 mm erhebt.

5. Stützkörperlose Rohrverbindung nach einem der Ansprüche 1 bis 4, **dadurch gekennzeichnet, dass** nur ein Zahnmittel (4) vorgesehen ist oder dass zwei Zahnmittel (4', 5) vorgesehen sind.

6. Stützkörperlose Rohrverbindung nach Anspruch 5, **dadurch gekennzeichnet, dass** das eine Zahnmittel (4) im Wesentlichen in der Mitte des Aufnahmebereiches angeordnet ist oder dass die zwei Zahnmittel (4', 5) im Wesentlichen gleichmässig beabstandet von der Mitte des Aufnahmebereiches angeordnet sind.

7. Stützkörperlose Rohrverbindung nach einem der Ansprüche 1 bis 6, **dadurch gekennzeichnet, dass** in Rohreinschieberichtung auf den zweiten oder gegebenenfalls dritten zylindrischen Innenwandungsabschnitt (6,6',7) ein konisch zulaufender weiterer Innenwandungsabschnitt (7') folgt.

8. Stützkörperlose Rohrverbindung nach Anspruch 7, **dadurch gekennzeichnet, dass** auf den konischen Innenwandungsabschnitt (7') ein zylindrischer Abschlussabschnitt (7'') folgt.

9. Stützkörperlose Rohrverbindung nach einem der Ansprüche 1 bis 8, **dadurch gekennzeichnet, dass** die Form des Zahnmittels (4,4',5) im Querschnitt annähernd dreieckig ist, insbesondere mit einem Winkel von 40 bis 50 Grad und insbesondere 45 Grad zwischen der wandungsseitigen Basis und den Schenkeln des Dreiecks.

10. Stützkörperlose Rohrverbindung nach Anspruch 9, **dadurch gekennzeichnet, dass** die freie Spitze des Dreiecks abgeflacht oder abgerundet ist.

11. Stützkörperlose Rohrverbindung nach einem der Ansprüche 1 bis 10, **dadurch gekennzeichnet, dass** der Pressring mehrere, vorzugsweise drei, Bereiche (14,15,16) mit zueinander entgegen der Aufschieberichtung abnehmenden Innendurchmessern aufweist.

12. Stützkörperlose Rohrverbindung nach einem der Ansprüche 1 bis 10, **dadurch gekennzeichnet, dass** der hohle Verbindungskörper (2) zur Aufnahme eines Kunststoffrohres ausgestaltet ist und die Zahnmittel eine Erhebung von 0,1 bis 1 Millimeter und insbesondere 0,5 bis 1 Millimeter aufweist.
